# EUROPEAN PATENT APPLICATION

(11) **EP 4 772 402 A1**
(43) Date of publication of application: **08.07.2026**
(21) Application number: 23950802.1
(22) Date of filing: 31.08.2023
(51) Int. Cl.: B60R 16/02, B60K 1/00, F16F 7/12

(54) **ON-VEHICLE EQUIPMENT STRUCTURE**

(71) Applicant: Nissan Motor Co., Ltd., Yokohama-shi, Kanagawa 221-0023 (JP)
(72) Inventor: NABUCHI, Hiroaki, Atsugi-shi, Kanagawa 243-0123 (JP); CHIHARA, Sho, Atsugi-shi, Kanagawa 243-0123 (JP); EGUCHI, Hiroki, Atsugi-shi, Kanagawa 243-0123 (JP); YOSHIWARA, Yuto, Atsugi-shi, Kanagawa 243-0123 (JP); SAITOU, Masazumi, Atsugi-shi, Kanagawa 243-0123 (JP); MIURA, Keisuke, Atsugi-shi, Kanagawa 243-0123 (JP)
(74) Representative: Global IP Europe Patentanwaltskanzlei
(86) International application number: PCT/JP2023/031916
(87) International publication number: WO 2025/046859

(57) **Abstract**

An in-vehicle equipment structure has a structure in which an electric device 2 is attached via a bracket B to the side surface in the vehicle width direction of a drive device 1 installed in a vehicle. The bracket B includes a first, second and third legs 11, 12, and 13 and has a three-pronged shape. The first, second, and third legs 11, 12, and 13 include fixing parts 11A, 12A, and 13A for fixing to the drive device 1, and connecting parts 11B, 12B, and 13B for connecting to the electric device, respectively. In the event of vehicle collision, the deformation or breakage of the bracket B reliably reduces the input of a collision load to the electric device 2, thereby preventing damage to the electric device 2.

## Description

### TECHNICAL FIELD

The present invention relates to an in-vehicle equipment structure used for in-vehicle equipment, such as devices housed in the engine compartment of an automobile.

### BACKGROUND OF THE INVENTION

One of the conventional in-vehicle equipment structures is disclosed in Patent Document 1. Patent Document 1 describes a vehicle front structure that is a structure of a front part of an electric vehicle. In the structure, an electric compressor is connected to the side surface of a motor housing in the vehicle width direction, through a bracket consisting of a mounting bracket, a support bracket, and auxiliary bracket. The vehicle front structure helps to reduce deformation of the connecting part of the electric compressor during a collision.

### RELATED ART LITERATURE

### Patent Literature

Patent Document 1 : Japan Patent Publication of Application Number 2020-142626

### SUMMARY OF THE INVENTION

### Technical Problem

The conventional vehicle front structure described above, however, had a problem in that when an excessive collision load was applied to the bracket during a frontal collision, the bracket might not be able to withstand the collision load, and the collision load might be input to the electric compressor. In a vehicle, it is important to take sufficient measures to ensure that high-voltage electric device such as the electric compressor is not damaged during a collision.

The present invention has been made in view of the above-mentioned conventional problems, and an objective is to provide an in-vehicle equipment structure that has a structure in which an electric device is attached to the side surface of a drive device installed in a vehicle through a bracket, and that when a vehicle is hit from the front, can reliably prevent a collision load from inputting to the electric device and can reduce damage to the electric device.

### Solution to the Problem

An in-vehicle equipment structure according to the present invention has a structure in which an electric device is attached via a bracket to the side surface in the vehicle width direction of the drive device installed in the vehicle. The in-vehicle equipment structure includes a bracket having a three-pronged shape with a first leg, a second leg, and a third leg, each leg includes a fixing part for fixing to the drive device and a connecting part for connecting to the electric device.

### Advantageous Effect of the Invention

When a vehicle having an in-vehicle equipment structure according to an embodiment of the present invention with the above configuration experiences a frontal collision, because the bracket deforms or breaks significantly, the collision load is absorbed while simultaneously moving the electric device towards the rear of the vehicle. As above, when the vehicle having the in-vehicle equipment structure in which a drive device is installed in the vehicle and an electric device is attached via a bracket to the side surface of the drive device, is involved in a frontal collision, the structure can reliably prevent the collision load from inputting to the electric device, thereby defending the electric device from damage.

### BRIEF DESCRIPTION OF THE DRAWINGS

FIG. 1 is an explanatory diagram schematically illustrating an in-vehicle equipment structure according to a first embodiment of the present invention.
FIG. 2 is a side view of a bracket.
FIG. 3 is a front view of the relevant parts of the in-vehicle equipment structure as seen from the front of the vehicle.
FIG. 4 is a side view of the relevant parts of the in-vehicle equipment structure as seen from the side in a width direction of the vehicle.
FIG. 5 is a rear view of the relevant parts of the in-vehicle equipment structure as seen from the rear of the vehicle.
FIG. 6 is a horizontal cross-sectional view illustrating the fastening piece of the third leg.
FIG. 7 is a plan view of the electric device as seen from above the vehicle.

### DESCRIPTION OF EMBODIMENTS

### < First Embodiment >

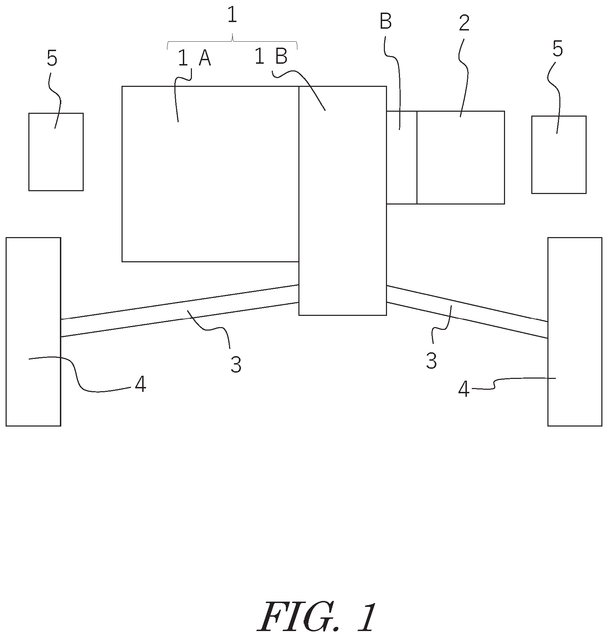

FIG. 1 is a diagram illustrating a schematic view of an in-vehicle equipment structure as seen from the front of the vehicle. The in-vehicle equipment structure is a structure in which an electric device 2 is attached via a bracket B to the side surface in the vehicle width direction of a driving device 1 installed in the vehicle. The drive device 1 of the illustrated example includes an electric motor 1A and a speed reducer 1B that are the driving sources of an electric vehicle. The electric device 2 is a high-voltage device, such as an electric compressor.

In FIG. 1, the output of the speed reducer 1B of the drive device 1 is transmitted through left and right axles 3, 3 to left and right tires 4, 4. Furthermore, side members 5, 5 that constitute the framework of the vehicle are arranged in the side of the electric motor 1A and the side of the electric device 2, respectively.

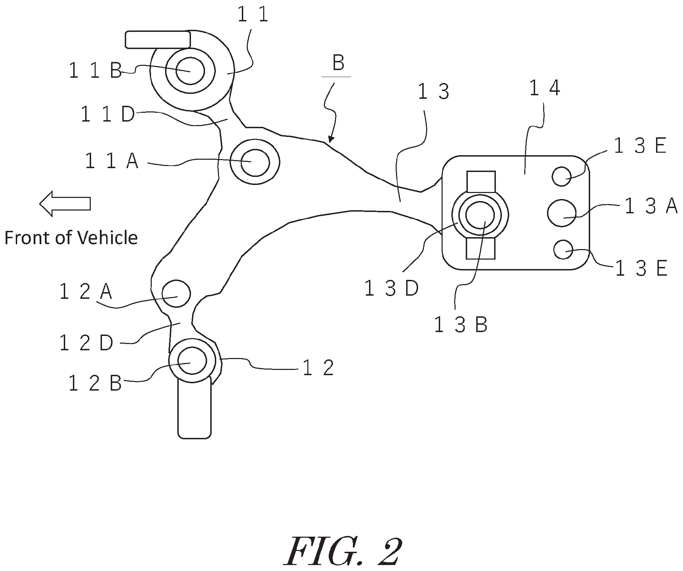

As illustrated in FIG. 2, the bracket B includes first, second, and third legs 11, 12, and 13 that are arranged two-dimensionally, and has a three-pronged shape. The first, second, and third legs 11, 12, and 13 include fixing parts 11A, 12A, and 13A for fixing to the drive device 1, and connecting parts 11B, 12B, and 13B for connecting to the electric device 2, respectively.

The bracket B illustrated in FIG. 1 includes the first, second, and third legs spaced approximately 120 degrees apart. The lines connecting the fixing parts 11A, 12A, and 13A of the first, second, and third legs, and the lines connecting the connecting parts 11B, 12B, and 13B of the first, second, and third legs form respective triangles. In other words, the fixing parts 11A, 12A, and 3A and the connecting parts 11B, 12B, and 13B are located at the vertices of respective triangles. The bracket B is supported at three points by the drive device 1 and the electric device 2, respectively.

Here, bolts or something similar to bolts are used to fix the bracket B to the drive device 1, or to connect the bracket B to the electric device 2. For this reason, examples of the fixing parts 11A, 12A, 13A and the connecting parts 11B, 12B, 13B of the bracket B include, but are not limited to, through holes, bottomed holes, female threaded holes, male screws. The bolts or something similar to bolts for using as the fixing parts or connecting parts can be selected depending on the location thereof on or the role in the bracket B.

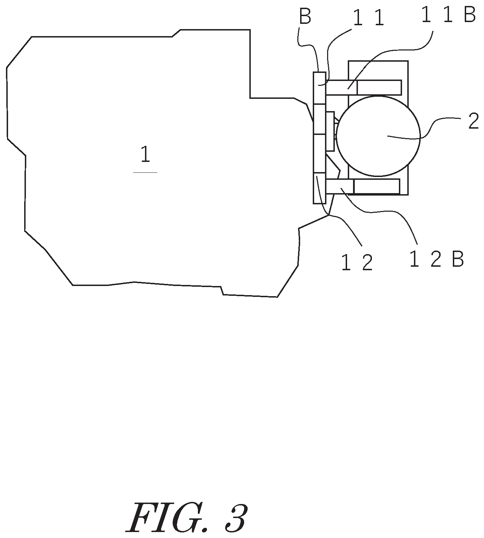

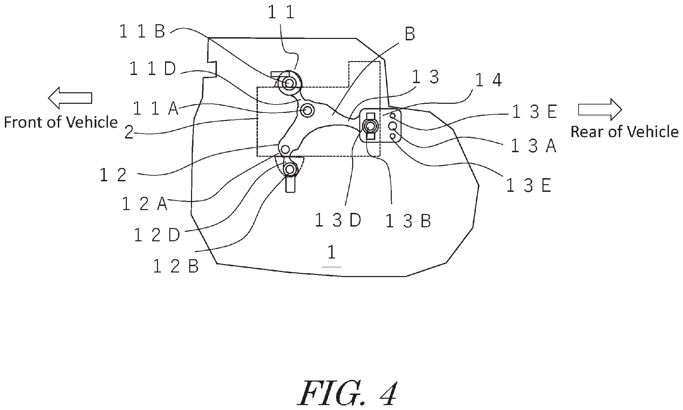

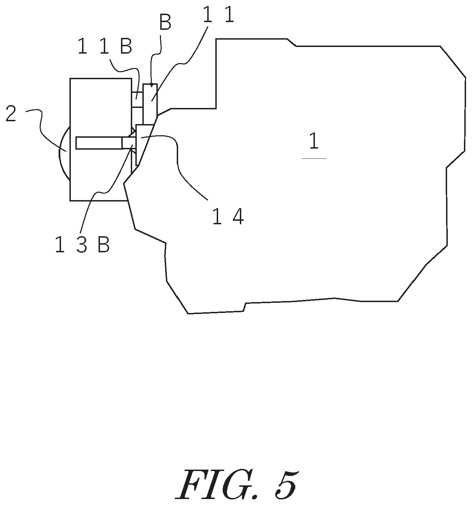

As illustrated in FIGs. 3 to 5, the above bracket B is arranged so that the first leg **11** and the second leg 12 are located in the front of the vehicle (left side in FIG. 4) and the third leg is located in the rear of the vehicle. In the bracket B, the first leg 11 and the second leg 12 include connecting parts 11B and 12 B in their respective tip sides of the legs, and include fixing parts 11A and 12A closer to the base end sides of the legs than the connecting parts 11B and 12B, respectively. Furthermore, the first leg 11 and the second leg 12 include fragile parts 11D and 12D, which are locally reduced cross-sectional areas, between the connecting parts 11B and 12B and the fixing parts 11A and 12A, respectively.

In contrast, the third leg 13 of the bracket B includes a fixing part 13A in the tip side of the third leg, and includes a connecting part 13B closer to the base end side of the third leg than the fixing parts 13A. In this embodiment, as illustrated in FIG. 2, the third leg 13 includes a fastening piece 14 with a rectangular shape in the tip of the third leg, and the fastening piece 14 includes the fixing part 13A in the tip side of the piece (right side in FIG, 2) and the connecting part 13B in the base end side of the piece.

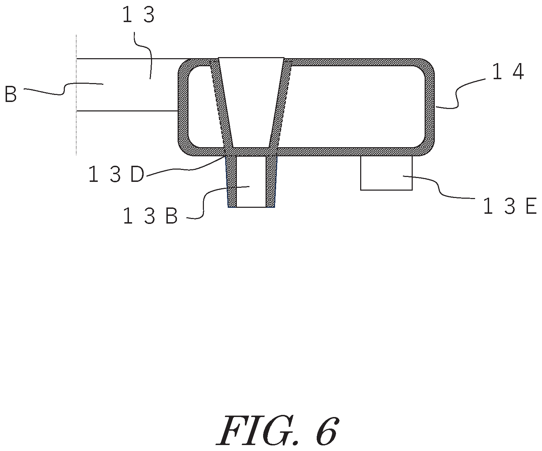

As illustrated in FIG. 6, the connecting part 13B of the third leg 13 has a boss shape in which the connecting part protrudes toward the electric device 2 (in FIG. 6, toward the lower side), and includes a fragile part 13D with a hollow shape in the base end of the connecting part with a boss shape.

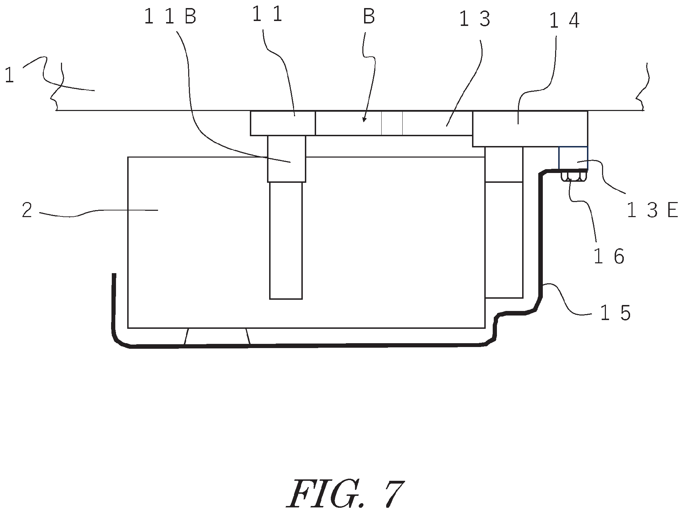

Moreover, as illustrated in FIG.2 and FIG. 7, in the above-mentioned third leg 13 includes, on the fastening piece 14, the fixing part 13A and the connecting part 13B, and a fastening part 13E for fastening a protective material 15 surrounding the outside of the electric device 2. In this embodiment, as illustrated in FIG. 2, in the fastening piece 14, the fastening parts 13E are arranged on both sides of the fixing part 13A.

Similar to the fixing parts and the connecting parts described above, examples of the fastening part 13E includes, but are not limited to, through holes, bottomed holes, female threaded holes, male screws. In this embodiment, as illustrated in FIG. 7, the fastening part 13E fastens a screw 16 that fixes the protective material 15.

In the in-vehicle equipment structure having the above-described configuration, the drive device 1 is connected via the bracket B to the electric device 2, thus the bracket B contributes to maintaining the connection state therebetween with sufficient mechanical strength. With a vehicle with the in-vehicle equipment structure, in the event of a vehicle collision, the bracket B significantly deforms or breaks, allowing the electric device 2 to be evacuated (be moved) toward the rear of the vehicle while absorbing the collision load.

In this way, according to the in-vehicle equipment structure in which to the side surface of the drive device 1 installed in the vehicle, an electric device 2 is attached via the bracket B, in the event of a vehicle collision, the collision load input to the electric device 2 is reliably reduced, thereby preventing damage to the electric device 2.

Here, a vehicle with the in-vehicle equipment structure in which the relations of positioning of the fixing parts 11A, 12A, and 13A of the first, second, and third legs 11, 12, and 13 and the relations of positioning of the connecting parts 11B, 12B, and 13B thereof (that is, positional relationship of respective parts in the tip side and the base end side of the vehicle) are all the same, can cause sound and shaking issues, such as noise and vibration.

To avoid this, in the above-described in-vehicle equipment structure, the connecting parts 11B, 12B are provided in the tip sides of the first and second legs 11, 12 that are positioned in the front of the vehicle, respectively, and the fixing part 13A is provided in the tip side of the third leg 13 that is positioned in the rear of the vehicle, making the first and second legs 11, 12 more vulnerable to deformation and breakage than the third leg 13 to a collision load, thereby achieving a trade-off between sound and vibration, and deformation and breakage.

According to the vehicle with the above in-vehicle equipment structure in which the first and second legs 11, 12 include respective fragile parts 11D, 12D, in the event of inputting collision load to the vehicle, the breaking of the first and second legs 11, 12 is promoted, thereby effectively achieving the trade-off between the noise and vibration, and deformation and breakage, and further improving the protection performance to the electric device 2.

Furthermore, with the above-mentioned in-vehicle equipment structure, the connecting part 13B of the third leg 13 includes a fragile part 13D with a hollow shape in the base end of the connecting part with a boss shape, so that when a large collision load is input to the vehicle, all of the first, second and third legs 11, 12, 13 break, completely detaching the electric device 2 from the drive device 1, thereby more reliably reducing damage to the electric device 2.

Furthermore, with the above-described in-vehicle equipment structure, as a protective material 15 that surrounds the outside of the electric device 2 is fastened to the fastening piece 14 of the third leg 13, the protective material 15 also serves as a reinforcement for the third leg 13 of the bracket B. In addition, during a vehicle collision, the side members 5, 5 illustrated in FIG. 1 bend inward to absorb the impact from the collision. With this in-vehicle equipment structure, in addition to the above, the protective material 15 prevents the side members 5 that have been deformed, from coming into contact with the electric device 2.

Furthermore, according to the above-described in-vehicle equipment structure, when the drive device 1 is a drive system, such as a driving source of the vehicle and the electric device 2 is an electric compressor, the electric compressor, which is a high-voltage device, can be protected from collision loads, and malfunctions of the vehicle caused by damage to the electric compressor can be prevented before they occur.

The details of the configuration of the in-vehicle equipment structure according to the present invention are not limited to the above-described embodiment, but can be modified as appropriate within the scope of the gist of the present invention. In particular, with regard to the bracket, the specific shape and the arrangement of respective parts can be selected as appropriate.

### REFERENCE SIGNS LIST

- B: bracket
- 1: drive device (drive system)
- 2: electric device (electric compressor)
- 11: first leg
- 12: second leg
- 13: third leg
- 11A, 12A, 13A: fixing part
- 11B, 12B, 13B: connecting part
- 11D, 12D, 13D: fragile part
- 13E: fastening part
- 14: fastening piece
- 15: protective material

## Claims

1. An in-vehicle equipment structure in which a vehicle includes a drive device and an electric device that is attached via a bracket to a side surface of the drive device in a vehicle width direction, wherein
the bracket includes a first leg, a second leg, and a third leg and has a three-pronged shape, and
each of the first leg, the second leg, and the third leg includes a fixing part for fixing to the drive device and a connecting part for connecting to the electric device.

2. The in-vehicle equipment structure according to claim 1, wherein
the bracket is arranged with the first leg and the second leg that are positioned in a front of the vehicle and the third leg that is positioned in a rear of the vehicle,
each of the first leg and the second leg includes the connecting part in a tip side of the leg, and the fixing part located closer to a base end side of the leg than the connecting part, and
the third leg includes the fixing part in a tip side of the third leg, and the connecting part located closer to a base end side of the third leg than the fixing part.

3. The in-vehicle equipment structure according to claim 2,
wherein
each of the first leg and the second leg includes a fragile part that is locally reduced cross-sectional area between the connecting part and the fixing part.

4. The in-vehicle equipment structure according to claim 2,
wherein
the connecting part of the third leg has a boss shape in which the connecting part protrudes toward the electric device, and includes a fragile part with a hollow shape in a base end of the connecting part with the boss shape.

5. The in-vehicle equipment structure according to claim 4,
wherein
the third leg includes a fastening piece in a tip side of the third leg, and
the fastening piece includes the fixing part, the connecting part, and a fastening part for fastening a protective material that surrounds an outside of the electric device.

6. The in-vehicle equipment structure according to claim 1,
wherein
the drive device is a drive system including a driving source of a vehicle, and
the electric device is an electric compressor.

## Amended claims

### Amended claims under Art. 19.1 PCT

1. (amended) An in-vehicle equipment structure in which a vehicle includes a drive device and an electric device that is attached via a bracket to a side surface of the drive device in a vehicle width direction,
wherein
the bracket includes a first leg, a second leg, and a third leg and has a three-pronged shape, and
the first leg, the second leg, and the third leg each includes a fixing part for fixing to the drive device and a connecting part for connecting to the electric device,
the bracket is arranged with the first leg and the second leg that are positioned in a front of the vehicle and the third leg that is positioned in a rear of the vehicle,
each of the first leg and the second leg includes the connecting part in a tip side of the leg, and the fixing part located closer to a base end side of the leg than the connecting part, and
the third leg includes the fixing part in a tip side of the third leg, and the connecting part located closer to a base end side of the third leg than the fixing part.

2. (deleted)

3. (amended) The in-vehicle equipment structure according to claim 1,
wherein
each of the first leg and the second leg includes a fragile part that is locally reduced cross-sectional area between the connecting part and the fixing part.

4. (amended) The in-vehicle equipment structure according to claim 1,
wherein
the connecting part of the third leg has a boss shape in which the connecting part protrudes toward the electric device, and includes a fragile part with a hollow shape at the base end of the connecting part with the boss shape.

5. The in-vehicle equipment structure according to claim 4,
wherein
the third leg includes a fastening piece in a tip side of the third leg, and
the fastening piece includes the fixing part, the connecting part, and a fastening part for fastening a protective material that surrounds an outside of the electric device.

6. The in-vehicle equipment structure according to claim 1,
wherein
the drive device is a drive system including a drive source for a vehicle, and
the electric device is an electric compressor.

Statement under Art. 19.1 PCT
Claims 1, 3, and 4 were amended, and Claim 2 was deleted.

The Claim 1 was amended to limit the configuration of the bracket of Claim 1 to the configuration thereof described in Claim 2, which was previously found to be novel and inventive. The amendment to the bracket of Claim 1 is based on paragraphs [0014] and [0015] of the description and FIGs. 3 to 5 of the drawings, both as originally filed.

Claims 3 and 4 remain as they were at the time of filing, except for the change in dependency whereby Claim 2 has been deleted from the claim set and Claims 3 and 4 have each been changed to be dependent from Claim 1.

Claims 5 and 6 remain as they were at the time of filing.
